# EUROPEAN PATENT SPECIFICATION

(11) **EP 1 602 478 B1**
(45) Date of publication and mention of the grant of the patent: **14.10.2009**
(21) Application number: 05076331.7
(22) Date of filing: 26.02.2003
(51) Int. Cl.: B23B 27/14, C04B 41/85, C04B 41/50, C04B 35/64

(54) **Cutting element including semiconductive polycrystalline diamond**
Halbleitenden polykristallinen Diamant enthaltendes Schneidelement
Elément de coupe composite contenant du diamant polycristallin semi-conducteur

(30) Priority: 26.02.2002 US 359630 P
(43) Date of publication of application: 07.12.2005
(62) Divisional of application: 03251153.7
(73) Proprietor: Smith International, Inc., Houston, Texas 77032 (US)
(72) Inventor: Middlemiss, Stewart, Salt Lake Utah 84124 (US)
(74) Representative: W.P. Thompson & Co.

(56) References cited:
- EP-A- 0 392 467
- EP-A- 0 822 269
- US-A- 4 610 699
- MASOOD A ET AL: "SYNTHESIS AND ELECTRICAL CHARACTERIZATION OF BORON-DOPED THIN DIAMOND FILMS" APPLIED PHYSICS LETTERS, AMERICAN INSTITUTE OF PHYSICS. NEW YORK, US, vol. 61, no. 15, 12 October 1992 (1992-10-12), pages 1832-1834, XP000316480 ISSN: 0003-6951

## Description

### BACKGROUND OF THE INVENTION

This invention relates to a cutting element including a polycrystalline diamond material and more specifically semiconductive polycrystalline diamond that exhibits enhanced cuttability, especially Electro-Discharge Machining or Electro-Discharge Grinding cuttability.

Polycrystalline diamond (PCD) materials known in the art are typically formed from diamond grains or crystals and a ductile metal catalyst/binder, and are synthesized by high temperature/high pressure ("HTHP") processes. Such PCD materials are ultra hard materials well known for their mechanical property of high wear resistance, making them a popular material choice for use in such industrial applications as cutting tools for machining, and subterranean mining and drilling, where the mechanical property of wear resistance is highly desired. In such applications, conventional PCD materials can be provided in the form of a surface coating, e.g., on inserts used with cutting and drilling tools, to improve wear resistance of the insert. Traditionally, PCD inserts used in such applications are produced by forming one or more layers of PCD-based material over a suitable substrate material. Such inserts, also referred to as cutting elements, comprise a substrate, a PCD surface layer, and optionally one or more transition layers to improve the bonding between the exposed PCD surface layer and the underlying substrate support layer. Substrates used in such insert applications are commonly formed from a carbide material such as tungsten carbide, WC, cemented with cobalt, Co, and commonly referred to as a cemented tungsten carbide, WC/Co system.

The layer or layers of PCD conventionally may include a metal binder therein The metal binder is used to facilitate intercrystalline bonding between diamond grains, and acts to bond the layers to each other and to the underlying substrate. The metal binder material is generally included at a weight percentage of about 10% by weigh. Metals conventionally employed as the binder are often selected from the group including cobalt, iron, or nickel and/or mixtures or alloys thereof. The binder material may also include metals such as manganese, tantalum, chromium and/or mixtures or alloys thereof. The metal binder may be provided in powder form as an ingredient for forming the PCD material, or can be drawn into the PCD material from the substrate material during HTHP processing also referred to as the "sintering" process.

The amount of binder material that is used to form PCD materials represents a compromise between the desired material properties of toughness and hardness/wear resistance. While a higher metal binder content typically increases the toughness of the resulting PCD material, higher metal content also decreases the PCD material hardness, wear resistance and thermal stability. Thus, these inversely affected desired properties ultimately limit the flexibility of being able to provide PCD coatings having desired levels of both wear resistance and toughness to meet the service demands of particular applications. Additionally, when the PCD composition is chosen to increase the wear resistance of the PCD material, typically brittleness also increases, thereby reducing the toughness of the PCD material.

In many instances, after the PCD is formed, it must be cut to desired shapes for use in a cutting tool. Cutting is typically accomplished using Electro-Discharge Machining (EDM) or Electro-Discharge Grinding (EDG) operations which are well known in the art. However, because of the insulating nature of the diamond skeleton in conventional PCD it is essential to have a metallic matrix material present at the cut to ensure some conductivity of the PCD, essential to the aforementioned cutting operations. The metal binder in the PCD forms a metallic matrix and provides conductivity that supports EDM or EDG cutting. However, cooling fluid or dielectric fluid used for cooling during EDM or EDG cutting, may leach out the metal matrix from the PCD and significantly increase the resistance of the PCD layer. Various cooling/dielectric solutions such as Adcool^{™}, and other corrosion inhibiting solutions and/or deionized water may be used during the EDM or EDG process, The electrical arcing produced between the cutting surface and the wire in EDM operations, and the grinding wheel in EDG operations, also causes leaching.

If the resistance of the PCD increases significantly due to the metal matrix in the PCD leaching out, or if areas with relatively little metal matrix are encountered, very slow or zero cutting rates may result and breakage of the cutting wire incorporated in the EDM process may occur. In some instances extra metal is provided in the PCD material to overcome this problem. Adding additional metal results in lower thermal stability of the PCD as well as reduced material hardness and a correspondingly reduced wear resistance.

Thus, a PCD material is desired that has enhanced EDM and EDG cuttability without a reduction in material hardness, wear resistance and thermal stability.

US-A-4610 699 discloses a hard diamond sintered body, wherein diamond particles are mutually bonded, obtained by graphitizing a part or whole of a synthetic diamond powder comprising Group VIII iron group metals of the Periodic Table or metals selected from Cr, Mn and Ta present in an amount of 0.01 to 10% by weight and then sintering the powder under such conditions that the diamond is stable, said sintered body containing intermetallic compounds consisting of at least one material selected from said iron group metals of Cr, Mn and Ta or alloys thereof and/or said metals or alloys and at least one metal selected from Ti, Zr, Hf, V, Nb, Mo, W, Cr and Ta as the remainder in an amount of 0.01 to 12% by weight.

EP-0 822 269 A1 discloses a CVD diamond layer for use as an insert in an abrasive tool characterised by the following features:
(i) the layer contains boron dopant atoms in a concentration of at least 0.05 atomic percent;
(ii) an average tensile rupture strength of at least 600MPa with the nucleation phase in tension, and at least 300MPa with the growth face in tension, both such tensile rupture strengths being measured by a three point bend test on a sample 18mm long, 2mm wide and a thickness of 1.4mm or smaller.

### SUMMARY OF THE INVENTION

According to the present invention there is provided a cutting element comprising:-
a substrate; and
a polycrystalline diamond material bonded to the substrate and comprising diamond crystals doped with a material selected from the group consisting of Be, Li and Al.

In one embodiment, the polycrystalline diamond ultra hard material includes semiconductive diamond crystals therein. The semiconductive diamond crystals may be diamond crystals doped with lithium, beryllium or aluminum. In another exemplary embodiment, the polycrystalline diamond ultra hard material is formed of conventional diamond crystals, at least some of which include semiconductive outer surface layers. According to either of the aforementioned exemplary embodiments, the polycrystalline diamond ultra hard material is a semiconductor material.

According to one exemplary method of making a cutting element of the present invention, a substrate is provided and a polycrystalline diamond layer is formed over the substrate. The polycrystalline diamond layer is formed over the substrate by providing a layer of diamond powder comprising non-conductive diamond grit feedstock and an additive, and converting the layer of diamond powder to polycrystalline diamond that is a solid semiconductor material. The additive may be chosen from the group consisting of lithium, beryllium, and aluminum. Diamond grit feedstock composed of conventional, insulative diamond crystals, for example Type I diamond crystals, may be used.

According to another exemplary method of making a cutting element of the present invention, a layer of diamond grit feedstock including diamond crystals doped with at least one of beryllium, litium and aluminum, is provided and then sintered to convert the layer of diamond grit feedstock to a semiconductive, solid polycrystalline diamond layer.

According to either of the exemplary methods of formation, the ultra hard PCD layer is formed as a semiconductor material with increased conductivity compared to PCD layers formed of conventional insulative diamond crystals, such as Type I diamond crystals. Even if all the metal binder materials that may be included in the PCD layer are removed by leaching, the cuttability of the semiconductive PCD material of the present invention is enhanced, especially EDM and EDG cuttability.

### BRIEF DESCRIPTION OF THE DRAWINGS

The invention is best understood from the following detailed description when read in conjunction with the accompanying drawings. It is emphasized that, according to common practice, the various features of the drawing are not to scale. On the contrary, the dimensions of the various features may be arbitrarily expanded or reduced for clarity. Like numerals denote like features throughout the specification and drawings. Included are the following figures:
FIG.1 is a perspective view of a cutting element according to an exemplary embodiment of the present invention;
FIG. 2 is a perspective view of a bit body outfitted with exemplary embodiment cutting elements of the present invention shown in FIG. 1;

### DETAILED DESCRIPTION OF THE INTENTION

A cutting element incorporating a PCD material having enhanced cuttability, especially EDM and EDG cuttability without comprising its hardness, wear resistance, or thermal stability is provided. An exemplary embodiment PCD material useful in the present invention has a substantial percentage of diamond crystals that are semiconductive in nature or which include semiconductive outer surface layers. Such diamond crystals contain small quantities of interstitial impurities such as lithium (Li), beryllium (Be), and aluminum (Al) that are sufficient to make them semiconductors.

Semiconductive diamonds are discussed in Wentorf, R.H. and Bovenkirk, H.P., "Preparation of Semiconducting Diamonds, "J. Chem. Phys. 36, p. 1987 (1962); Field, J.E., "The Properties of Diamond", Academic Press, 1979; and Wentorf, R.H., "The formation of Diamond at High Pressure", in Advances in High Pressure Research, Academic Press, p.249-281 (1974). On the other hand, PCD formed with conventional diamond crystals that are electrical insulators, includes a much higher resistance than the PCD of the present invention. This is true both for PCD materials which include metal binder materials therein, and PCD materials void of such metal binder materials.

An exemplary embodiment PCD useful in the present invention is formed by using semiconductive diamond grit feedstock formed of semiconductive diamond crystals doped with Li, Be or Al or combinations thereof. In another exemplary embodiment of the present invention, the PCD may be formed by using a combination of semiconductive and conventional, non-conductive diamond grit feedstock such as Type I diamond grit feedstock. In yet another exemplary embodiment of the present invention, the PCD is formed using conventional undoped diamond grit feedstock (such as Type I diamond grit feedstock) together with a suitable quantity of additives such as Li, Be and Al. The additives diffuse throughout the diamond lattice so as to cause the diamond crystals to transform to diamond crystals that include semiconductive surface layers. This diffusion phenomenon takes place during the HTHP sintering process used to solidify the PCD material. The PCD material formed according to each of the aforementiond methods, is semiconductive in nature. Hereinafter, both the PCD material formed using semiconductive diamond grit feedstock and the PCD material formed using conventional diamond grit feedstock and an additive to convert the diamond crystals to having semiconductive surface layers, will be collectively referred to as semiconductive PCD.

The semiconductive PCD used in the present invention is a solid structural body commonly referred to as an ultra-hard material or ultra-hard layer and may be used as a cutting layer on cutting tools and cutting elements. For convenience, cutting elements and cutting tools are referred to as "cutting elements" hereinafter. The semiconductive PCD may be a layer formed over a substrate to produce a cutting element. In an exemplary embodiment, the cutting element may be inserted into a drill bit and used for earth boring. The semiconductive PCD of the present invention may be used in various other applications and industries, in other exemplary embodiments.

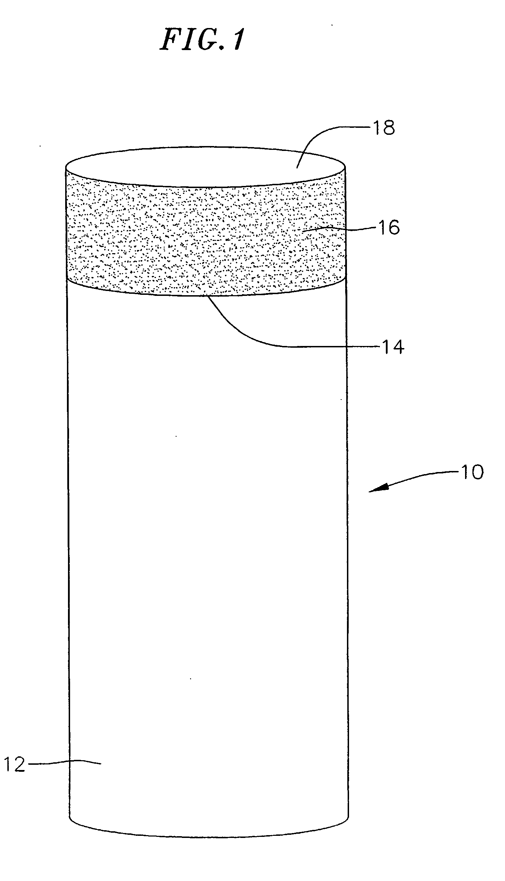

An exemplary cutting element is shown in FIG. 1. FIG. 1 shows cutting element 10 formed of substrate 12 and ultra hard layer 16 which is also referred to as a cutting table and includes top surface 18. Ultra hard layer 16 is formed of semiconductive PCD in the present invention. Interface 14 is formed between substrate 12 and ultra hard layer 16. According to another exemplary embodiment, one or more transition layers (not shown) may be formed between ultra hard layer 16 and substrate 12. The generally cylindrically-shaped cutting element illustrated in FIG. 1 is intended to be exemplary only and according to various other exemplary embodiments, the cutting elements and ultra-hard layers may take on any of various other shapes.

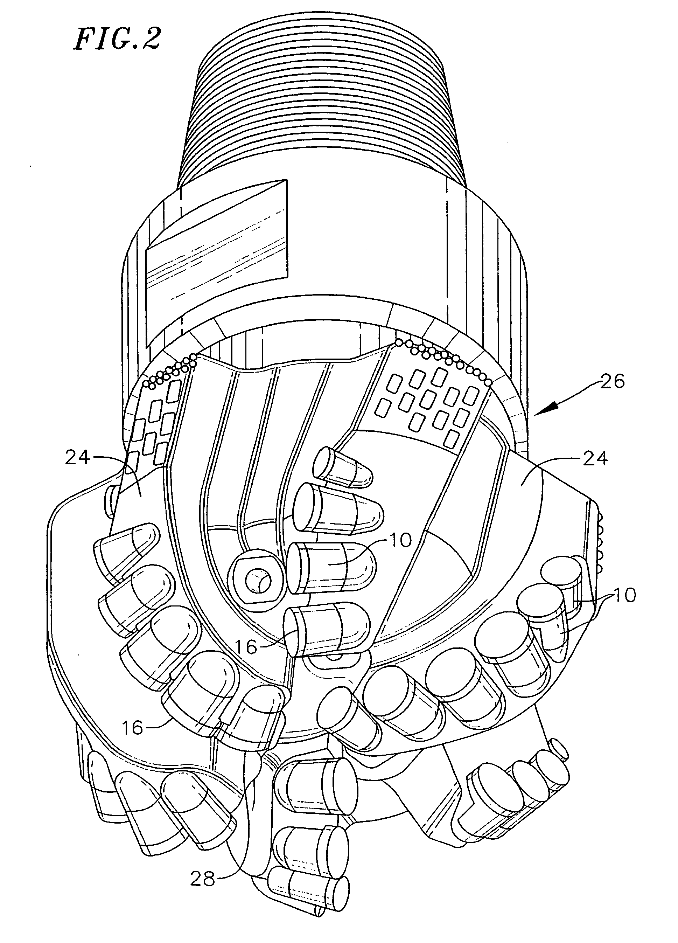

In an exemplary embodiment, the cutting element is mounted on a bit such as the drag bit shown in FIG. 2, and contacts the earthen formation along edge 28, during drilling. In the exemplary embodiment shown in FIG. 2, the cutting elements 10 are joined to pockets or other receiving shapes that extend into drag bit body 24 by brazing or other means well known in the art. The illustrated arrangement is intended to be exemplary only and cutting elements 10 may be used in various other arrangements in other exemplary embodiments.

The method for forming the semiconductive PCD material includes providing a substrate and providing a layer of diamond powder over the substrate, then using HTHP processing to sinter, thereby solidifying the layer of diamond powder and converting the same to an ultra-hard layer of PCD, and also bonding the PCD layer to the substrate to form a cutting element. The substrate may be a pre-formed solid substrate, or it may be provided in powder form and also solidified during the sintering operation. The substrate may be formed of various matrix materials. In an exemplary embodiment, the substrate may be formed of cemented tungsten carbide. Cemented tungsten carbide generally refers to tungsten carbide particles disbursed in a substrate binder metal matrix such as iron, nickel, or cobalt. Other substrate materials may be used in other exemplary embodiments. Wear resistant materials suitable for use as the substrate may be selected from compounds of carbide and metals selected from Groups IVB, VB, VIB, and VIIB of the Periodic Table of the Elements. Examples of other such carbides include tantalum carbide and titanium carbide. Substrate binder matrix materials suitable for use in embodiments of the invention include the transition metals of Groups VI, VII, and VII of the Periodic Table of the Elements. For example, iron and nickel are good substrate binder matrix materials.

The layer of diamond powder used to form a semiconductive PCD material in an exemplary embodiment of the present invention, includes of a plurality of fine diamond crystals. The layer of diamond powder may be provided directly on the substrate or one or more optional transition layers may be provided between the layer of diamond powder and the substrate.

According to one exemplary embodiment, the layer of diamond powder includes at least some semiconductive diamond grit feedstock consisting of diamond crystals doped with Li, Be, or Al. The semiconductive diamond feedstock may be mixed with conventional, undoped diamond feedstock to form the layer of diamond powder. In another exemplary embodiment, the diamond crystals of the layer of diamond powder may consist substantially only of semiconductive diamond grit feedstock.

According to another exemplary embodiment, the layer of diamond powder may consist of conventional diamond crystals that are insulators such as, for example, Type I diamond crystals. According to this exemplary embodiment, an additive such as Li, Be, or Al is added to the layer of diamond powder. The additives may be in powder or granular form and are mixed throughout the layer of diamond powder. In an exemplary embodiment, the additives may be mixed in uniformly throughout the diamond powder layer. The additives are chosen to be small enough to diffuse into the diamond lattice formed as the layer of diamond powder solidifies to form the PCD layer. Because of the small size of the diamond lattice in PCD, the lattice can only accommodate a limited number of impurity species (i.e., additives) for transforming the conventional, insulating diamond crystals to semiconductive diamond crystals. Li, Be, and Al are elements that are known to be small enough to diffuse into the diamond lattice. Other Li, Be and Al make the PCD a P-Type semiconductor.

The quantity of additive included in the layer of diamond powder ranges from 0.1 wt% to 10.0 wt% in an exemplary embodiment, but other weight percentages may be used in other exemplary embodiments. The upper limit of additive weight percentage is determined by the amount above which the sintering process is adversely affected. An appropriate quantity of suitably small elements or compounds of additives are chosen so that the additives diffuse into and throughout the diamond lattice and cause the insulating diamond crystals to transform to semiconductive diamond crystals. It has been found that a very small amount of the additives can convert the diamond crystals and achieve an improvement of increased conductivity. During the transformation of the insulating diamond material to a semiconductive material, some or all of the diamond crystals are converted to diamond crystals having a semiconductive surface due to diffusion of the additive. This diffusion phenomenon takes place during the HTHP sintering process used to solidify the PCD, during which the additive species are free to diffuse throughout the PCD. It is not necessary to obtain full conversion of the entire diamond crystal to a semiconductive diamond crystal in order to realize a significant conductivity improvement. Rather, the transformation of the surface layer of the diamond crystals to semiconductive surface layers, improves the conductivity and, hence, cuttability of the formed PCD. According to this embodiment, undoped diamond crystals, such as Type I diamond crystals, are converted to diamond crystals that include semiconductive surface layers.

According to either of the aforementioned exemplary methods of formation, an ultra-hard material of semiconductive PCD is produced. According to either of the exemplary embodiments, sufficient metal binder material may be included in the layer of diamond powder to produce a metal binder material within the PCD material at a volume percentage of up to about 30%, but other volume percentages of binder material may be used in other exemplary embodiments. According to another exemplary embodiment, the metal binder material may diffuse into the PCD layer from the substrate, during the HTHP sintering operation. In an exemplary embodiment, the weight percentage for metal binders may range from 8 -12% by weight and it is common for a weight percentage of no greater than 15% to be used. Metals such as cobalt, iron, nickel, manganese, tantalum, chromium and/or mixtures or alloys thereof may be used as a metal binder material. The metal binder material facilitates intercrystalline bonding between the diamond grains of the PCD layer, acts to bond the PCD layer to other layers or the substrate, and increases the conductivity of the PCD layer. An aspect of the present invention, however, is that because of the conductive nature of the diamond skeleton in the semiconductive PCD formed with semiconductive diamond crystals or diamond crystals having a semiconductive surface layer, it is not necessary to have a metal matrix present to ensure cuttability.

According to the various embodiments of the present invention, the PCD material has a conductivity sufficiently high to enable cutting using EDM and EDG, even when the PCD was formed without a metal binder or after the metal matrix material has essentially been completely removed by leaching. In one exemplary embodiment, PCD of the present invention that is substantially free of metal binders, was formed to have a resistance of less than 1000 ohms. In another embodiment, the PCD layer formed with a metal binder therein at a weight percentage no greater than 10%, had a resistance of less than 50 ohms.

The resistance values recited herein, are conventional resistance measurements made using probes spaced about 1 cm apart on the sample surface.

After the solid semiconductive PCD is formed, an Electro-Discharge Machining or Electro-Discharge Grinding cutting operation may be required to cut the PCD to a desired shape. Increased cutting rates can be achieved on such semiconductive PCD materials using EDM and EDG due to the semiconductive nature of the PCD. This is true even though the cooling and dielectric fluids used throughout the EDM and EDG processes, and the electrical arcs produced by the EDM and EDG processes themselves, leach any metal binder material from the semiconductive PCD during the cutting operation. Even if the metal binder is lost due to leaching, or if metal binder materials are not included at all, applicant has discovered that the PCD of the present invention is sufficiently conductive to ensure cuttability in Electro-Discharge Machining and Electro-Discharge Grinding cutting operations. The semiconductive PCD further includes a very high abrasion resistance while still retaining its cuttability. Since the addition of metal binder material can be reduced or even eliminated, the hardness, wear resistance and thermal stability of the formed PCD layer is not compromised and may be improved.

After the solid semiconductive PCD is cut to form a cutting element, the cutting element may be joined to a drill bit body by brazing or other means well known in the art.

The semiconductive PCD material useful in the present invention (i.e. a PCD layer with at least some Al-doped, Be-doped or Li-doped diamond crystals, or at least some diamond crystals having semiconductive surfaces), also has a much greater thermal conductivity than conventional PCD. Applicants believe that the thermal conductivity of the semiconductive PCD material of the present invention may be 15 times greater than the conductivity of conventional PCD material at 80°K and 4-5 times greater than the conductivity of conventional PCD material at room temperature. When used as a cutting layer in a cutting tool, a semiconductive PCD material is better able to conduct the heat generated by the abrasion of the PCD cutting layer against the object being cut, and thus maintain a lower temperature on the cutting layer. Increased temperatures on the cutting layer and the tool are known to decrease the life of the cutting tool. Consequently, the use of the semiconductive PCD of the present invention as a cutting layer, will provide an increased operating life of the cutting element.

The preceding merely illustrates the principles of the invention. It will thus be appreciated that those skilled in the art will be able to devise various arrangements which, although not explicitly described or shown herein, embody the principles of the invention and are included within the scope of the claims. Furthermore, all examples and conditional language recited herein are principally intended expressly to be only for pedagogical purposes and to aid in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass both structural and the functional equivalents thereof. Additionally, it is intended that such equivalents include both currently known equivalents and equivalents developed in the future, i.e., any elements developed that perform the same function, regardless of structure. The scope of the present invention, therefore, is not intended to be limited to the exemplary embodiments shown and described herein. Rather, the scope of the present invention is embodied by the appended claims.

## Claims

1. A cutting element comprising:-
a substrate; and
a polycrystalline diamond material bonded to the substrate and comprising diamond crystals doped with a material selected from the group consisting of Be, Li and Al.

2. A cutting element as claimed in claim 1, wherein the diamond crystals comprise semiconductive outer surface layers and wherein said surface layers comprise said material selected from the group consisting of Be, Li and Al.

3. A cutting element as claimed in claim 1 or 2, wherein said polycrystalline diamond material is a P-type semiconductor material.

4. A cutting element as claimed in anyone of the preceding claims, wherein the polycrystalline diamond material comprises Type I diamond crystals.

5. A cutting element as claimed in anyone of the preceding claims, wherein said polycrystalline diamond material is formed by sintering.

6. A cutting element as claimed in anyone of the preceding claims, wherein said polycrystalline diamond material has a resistance not greater than 50 ohms, measured using probes spaced about 1 cm apart on a surface of said polycrystalline diamond material.

7. A cutting element as claimed in anyone of the preceding claims, wherein said polycrystalline diamond material has a resistance of not greater than about 20 ohms, measured using probes spaced about 1 cm apart on a surface of said polycrystalline diamond material.

8. A cutting element as claimed in anyone of the preceding claims, wherein said polycrystalline diamond material has a resistance not greater than about 8 ohms, measured using probes spaced about 1 cm apart on a surface of said polycrystalline diamond material.

9. A cutting element as claimed in anyone of the preceding claims, wherein said polycrystalline diamond material further comprises a metal matrix

10. A cutting element as claimed in claim 9, wherein said metal matrix makes up no greater than about 10% by weight of the polycrystalline diamond material.

11. A cutting element as claimed in anyone of claims 1 to 5, wherein said polycrystalline diamond material is substantially free of a metal matrix and has a resistance not greater than about 1000 ohms, measured using probes spaced about 1 cm apart on a surface of said polycrystalline diamond material.

## Patentansprüche

1. Schneideelement, das Folgendes umfasst:
ein Substrat; und
ein polykristallines Diamantmaterial, das an das Substrat gebunden ist und das Diamantkristalle dotiert mit einem Material umfasst, das aus der Gruppe ausgewählt ist, die aus Be, Li und Al besteht.

2. Schneideelement nach Anspruch 1, worin die Diamantkristalle halbleitende äußere Oberflächenschichten umfassen und worin die Oberflächenschichten das Material umfassen, das aus der Gruppe ausgewählt ist, die aus Be, Li und Al besteht.

3. Schneideelement nach Anspruch 1 oder 2, worin das polykristalline Diamantmaterial ein Halbleitermaterial des P-Typs darstellt.

4. Schneideelement nach einem der vorangehenden Ansprüche, worin das polykristalline Diamantmaterial Diamantkristalle des Typs I umfasst.

5. Schneideelement nach einem der vorangehenden Ansprüche, worin das polykristalline Diamantmaterial durch Sintern gebildet wird.

6. Schneideelement nach einem der vorangehenden Ansprüche, worin das polykristalline Diamantmaterial einen Widerstand von nicht größer als 50 Ohm aufweist, der mit Messfühlern gemessen wird, die mit einem Zwischenraum von ca. 1 cm auf einer Oberfläche des polykristallinen Diamantmaterials angeordnet sind.

7. Schneideelement nach einem der vorangehenden Ansprüche, worin das polykristalline Diamantmaterial einen Widerstand von nicht größer als ca. 20 Ohm aufweist, der mit Messfühlern gemessen wird, die mit einem Zwischenraum von ca. 1 cm auf einer Oberfläche des polykristallinen Diamantmaterials angeordnet sind.

8. Schneideelement nach einem der vorangehenden Ansprüche, worin das polykristalline Diamantmaterial einen Widerstand von nicht größer als ca. 8 Ohm aufweist, der mit Messfühlern gemessen wird, die mit einem Zwischenraum von ca. 1 cm auf einer Oberfläche des polykristallinen Diamantmaterials angeordnet sind.

9. Schneideelement nach einem der vorangehenden Ansprüche, worin das polykristalline Diamantmaterial ferner eine Metallmatrix umfasst.

10. Schncideelement nach Anspruch 9, worin die Metallmatrix nicht mehr als ca. 10 Gew.-% des polykristallinen Diamantmaterials ausmacht.

11. Schneideelement nach einem der Ansprüche 1 bis 5, worin das polykristalline Diamantmaterial im Wesentlichen frei von einer Metallmatrix ist und einen Widerstand von nicht größer als ca. 1000 Ohm aufweist, der mit Messfühlern gemessen wird, die mit einem Zwischenraum von ca. 1 ein auf einer Oberfläche des polykristallinen Diamantmaterials angeordnet sind.

## Revendications

1. Elément de coupe, comprenant :
un substrat ; et
un matériau de diamant polycristallin lié au substrat et comprenant des cristaux de diamant dopés par un matériau choisi parmi le groupe constitué par Be, Li et Al.

2. Elément de coupe selon la revendication 1, dans lequel les cristaux de diamant comprennent des couches de surface externe semi-conductrices et dans lequel lesdites couches de surface comprennent ledit matériau choisi parmi le groupe constitué par Bc, Li et Al.

3. Elément de coupe selon les revendications 1 ou 2, dans lequel ledit matériau de diamant polycristallin est un matériau semi-conducteur de type P.

4. Elément de coupe selon l'une quelconque des revendications précédentes, dans lequel le matériau de diamant polycristallin comprend des cristaux de diamant de type I.

5. Elément de coupe selon l'une quelconque des revendications précédentes, dans lequel ledit matériau de diamant polycristallin est formé par frittage.

6. Elément de coupe selon l'une quelconque des revendications précédentes, dans lequel ledit matériau de diamant polycristallin a une résistance d'au plus 50 ohms, mesurée à l'aide de sondes espacées d'environ 1 cm sur une surface dudit matériau de diamant polycristallin.

7. Elément de coupe selon l'une quelconque des revendications précédentes, dans lequel ledit matériau de diamant polycristallin a une résistance d'au plus environ 20 ohms, mesurée à l'aide de sondes espacées d'environ 1 cm sur une surface dudit matériau de diamant polycristallin.

8. Elément de coupe selon l'une quelconque des revendications précédentes, dans lequel ledit matériau de diamant polycristallin a une résistance d'au plus environ 8 ohms, mesurée à l'aide de sondes espacées d'environ 1 cm sur une surface dudit matériau de diamant polycristallin.

9. Elément de coupe selon l'une quelconque des revendications précédentes, dans lequel ledit matériau de diamant polycristallin comprend en outre une matrice métallique.

10. Elément de coupe selon la revendication 9, dans lequel ladite matrice métallique ne constitue pas plus d'environ 10% en poids du matériau de diamant polycristallin.

11. Elément de coupe selon l'une quelconque des revendications 1 à 5, dans lequel ledit matériau de diamant polycristallin est sensiblement dépourvu de matrice métallique et a une résistance d'au plus environ 1000 ohms, mesurée à l'aide de sondes espacées d'environ 1 cm sur une surface dudit matériau de diamant polycristallin.
